(19) Europäisches Patentamt
European Patent Office
Office européen des brevets

(11) **EP 3 252 977 B1**

(12) **EUROPEAN PATENT SPECIFICATION**

(45) Date of publication and mention
of the grant of the patent:
**03.02.2021 Bulletin 2021/05**

(51) Int Cl.:
**H04L 1/00** (2006.01)

(21) Application number: **16172493.5**

(22) Date of filing: **01.06.2016**

(54) **SYSTEMS AND METHODS FOR ADAPTING A WIRELESS TRANSMISSION RATE**

SYSTEME UND VERFAHREN ZUR ANPASSUNG EINER DRAHTLOSÜBERTRAGUNGSRATE

SYSTÈMES ET PROCÉDÉS PERMETTANT D'ADAPTER UN DÉBIT DE TRANSMISSION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2017 Bulletin 2017/49**

(73) Proprietor: **Huawei Technologies Co., Ltd.**
**Longgang District**
**Shenzhen, Guangdong 518129 (CN)**

(72) Inventors:
• **WEITZMAN, Avi**
**80992 Munich (DE)**
• **KLAUSNER, Ohad**
**80992 Munich (DE)**
• **EZRI, Doron**
**80992 Munich (DE)**
• **REZNIC, Zvi**
**80992 Munich (DE)**
• **JIANG, Xingfeng**
**80992 Munich (DE)**
• **ZHANG, Wei**
**80992 Munich (DE)**
• **RUAN, Wei**
**80992 Munich (DE)**

(74) Representative: **Körber, Martin Hans et al**
**Mitscherlich PartmbB**
**Patent- und Rechtsanwälte**
**Sonnenstrasse 33**
**80331 München (DE)**

(56) References cited:
**US-A1- 2011 149 770**

• **DAJI QIAO ET AL: "Goodput enhancement of IEEE 802.11a wireless LAN via link adaptation", ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 7, 11 June 2001 (2001-06-11), pages 1995-2000, XP010553670, DOI: 10.1109/ICC.2001.936939 ISBN: 978-0-7803-7097-5**
• **DAJI QIAO ET AL: "Goodput analysis and link adaptation for IEEE 802.11a wireless LANs", IEEE TRANSACTIONS ON MOBILE COMPUTING, IEEE SERVICE CENTER, LOS ALAMITOS, CA, US, vol. 1, no. 4, 1 October 2002 (2002-10-01), pages 278-292, XP011095552, ISSN: 1536-1233, DOI: 10.1109/TMC.2002.1175541**
• **KLEBER V CARDOSO ET AL: "Increasing throughput in dense 802.11 networks by automatic rate adaptation improvement", WIRELESS NETWORKS ; THE JOURNAL OF MOBILE COMMUNICATION, COMPUTATION AND INFORMATION, KLUWER ACADEMIC PUBLISHERS, DO, vol. 18, no. 1, 24 September 2011 (2011-09-24), pages 95-112, XP019995210, ISSN: 1572-8196, DOI: 10.1007/S11276-011-0389-9**
• **ABDALLAH SAEED ET AL: "Joint rate adaptation, frame aggregation and MIMO mode selection for IEEE 802.11ac", 2016 IEEE WIRELESS COMMUNICATIONS AND NETWORKING CONFERENCE, IEEE, 3 April 2016 (2016-04-03), pages 1-6, XP032959282, DOI: 10.1109/WCNC.2016.7564941 [retrieved on 2016-09-12]**

**Description**

BACKGROUND

The present invention, in some embodiments thereof, relates to wireless networks and, more specifically, but not exclusively, to systems and methods for adapting a wireless transmission rate of a wireless network.

Wireless Local Area Networks (WLAN), for example based on the IEEE 802.11 standard, have become exemplary popular. WLANs provide device terminals (e.g., mobile devices, laptops, smart phones, smart television) with wireless access to internet applications such as email, file transfer, and browsing, increasing the demand for high bandwidth. However, wireless channels are extremely variable and are affected by a number of different factors, such as interference from other wireless devices, multi-path fading, and signal attenuation. Wireless networks include a rate adaptation mechanism to adapt the WLAN physical layer (PHY) rate value of the transmitting device to the channel conditions.

Rate adaptation methods vary the PHY rate of the wireless transmitter to match the wireless channel conditions to achieve the best possible performance. Wireless networks may use Rate Control Algorithm(s) (RCA) designed to adapt the data rate between several available rates (e.g., defined by the implemented wireless transmission standard) in response to changes of the channel and device terminal location changes (e.g., due to mobility). As noted above, wireless channels are variable and affected by multiple factors, for example, interference from other wireless devices, multi-path fading, and signal attenuation. The ability of the RCA to select optimal data rates for the channel conditions directly impacts the ability of the device terminals to maintain connectivity, and/or affects the wireless network throughput (efficiency).

Data rate adaption methods may be based on one of the following exemplary approaches:

* *ACK packet*: generally, the most popular approach used by wireless networks. Data rates are adapted according to the result of success (represented by ACK) or failure (represented by NACK or timeout- no ACK) of transmissions. Loss ratios and average transmission time for each data rates are recorded to predict which data rate is able to perform the best in the current wireless condition. Exemplary ACK packet based algorithms are: Auto Rate Fallback (ARF), Robust Rate Adaptation Algorithm (RRAA), Adaptive Auto Rate Fallback (AARF), Adaptive Multi Rate Retry (AMRR), ONOE, SampleRate, Minstrel, and PID.

* *Rx SNR:* use a Request To Send (RTS)/ Clear To Send (CTS) mechanism to calculate a Signal to Noise Ratio (SNR) and determine the optimal data rate. Selected data rate for each data frame is calculated at the receiver node, and sends back to the sender node via CTS control frame. Typical examples of SNR based algorithm are: Receiver Based Auto Rate (RBAR), CHARM, and FARA.

* *Bit Error Rate (BER):* tends to be the least popular approach in wireless networks. Uses a fine-grained metric to predict optimal data rates for each data frame. Exemplary algorithms include SoftRate.

The publication "Goodput enhancement of IEEE 802.11a wireless LAN via link adaptation" by Daji Qiao; Sunghyun Choi, published in 2001 IEEE INTERNATIONAL CONFERENCE ON COMMUNICATIONS, HELSINKY, FINLAND, JUNE 11 - 14, 2001 (ISBN 0-7803-7097-X) discloses an overview of the IEEE 802.11a Orthogonal Frequency Domain Multiplexing (OFDM) PHY with eight different PHY rates as well as the distributed coordination function (DCF) of the IEEE 802.11 MAC. Further, it discloses to derive goodput performance analytically for peer-to-peer communication under the DCF. Based on the numerical results, it is disclosed that link adaptation, which performs both dynamic fragmentation and PHY rate selection depending on the wireless channel condition between the transmitter and receiver, is an attractive way to improve the goodput performance of an IEEE 802.11a wireless LAN. Finally, we propose a system architecture to perform lirik uduprutiori.

The publication "Goodput analysis and link adaptation for IEEE 802.11a wireless LANs" by Daji Qiao, Shin Kang G., and Sunghyun Choi, published in IEEE TRANSACTIONS ON MOBILE COMPUTING, 2002, VOL. 1, NO. 4, ISSN 1536-1233 discloses link adaptation to dynamically select the data transmission rate at a given time to improve goodput performance of IEEE 802.11 wireless local-area networks (WLANs). A generic method to analyze the goodput performance of an 802.11a system under the Distributed Coordination Function (DCF) is disclosed. It is disclosed that the expected effective goodput is expressed as a closed-form function of the data payload length, the frame retry count, the wireless channel condition, and the selected data transmission rate. Then a MPDU (MAC Protocol Data Unit)-based link adaptation scheme for the 802.11a systems is disclosed.

SUMMARY

It is an object of the present invention to provide an apparatus, a system, a computer program product, and a method for adapting a wireless transmission rate.

The foregoing and other objects are achieved by the features of the independent claims. Further implementation forms are apparent from the dependent claims, the description and the figures.

The present invention is defined by a system according to independent claim 1, by a system according to independent claim 2, by a method according to independent claim 9 and by a method according to independent claim 10.

According to a first aspect, a device for adapting a wireless transmission rate comprises: a transmitter; a processor adapted to perform the following for a transmission of each of a plurality of sequential wireless local area network (WLAN) frames by the transmitter: estimate a packet Error Rate (PER) and/or Aggregation Error Rate (AER) for each of a plurality of physical layer (PHY) rate values (according to frame size); estimate a plurality of data transmit times each according to respective the PER and/or the AER and one of the PHY rate values; and select one of the PHY rate values for adaption of a wireless transmission rate of the transmitter in a following frame according to an analysis of the plurality of data transmit times.

The data transmit rate (i.e., throughput) provides a better indication of the WLAN performance, since throughput relates to the time it takes to transmit useful information, rather than the PHY rate (which includes overhead and other data that is not necessarily used by the high level application). The data transmit rate (i.e., throughput) provides a more accurate representation of the delays that users experience, since users directly sense how fast information is sent. For example, users watching a video or listening to music quickly perceive if the throughput is adequate, by noticing pauses in the sound and/or video, or perceiving changes in quality of the sound and/or video. Users cannot directly tell whether the data rate of the WLAN frames is sufficient.

The greatest improvement tends to occur for wireless transmission by real-time applications, for example, audio and/or video (e.g., playing music and/or videos streamed from a remote server), gaming, and Internet of Things (IoT) devices. Such real-time applications use small frame sizes, the performance of which is increased by the systems and/or methods described herein.

In a first possible implementation of the apparatus according to the first aspect, the processor is adapted to estimate each one of the plurality of data transmit times according to at least one of a PHY Protocol overhead value and Media access control (MAC) Protocol overhead value.

The overhead values are considered for calculation of the actual transmitted data, which further improves efficiency of the WLAN, by the WTR code 216 that increases the data transmit time while reducing or in view of the overhead values.

In a second possible implementation form of the apparatus according to the first aspect as such or according to any of the preceding implementation forms of the first aspect, the processor is adapted to quantize the PER per quantized Protocol data unit (PPDU) size, in particular including collisions and hidden node.

Estimating the PER per quantized PPDU may improve measurement of the PER (and/or BER), since the PER (and/or BER) increases when the transmission time increases, for example, in WLAN systems implementing 802.11.

The quantization may allow building of a look-up table, which may be quickly created and quickly accessed to select the PHY rate value.

In a third possible implementation form of the apparatus according to the first aspect as such or according to any of the preceding implementation forms of the first aspect, the processor is adapted to estimate each one of the plurality of data transmit times according to a member of a group cosseting of: a transmission scenario, a PHY rate and/or Modulation and Coding Scheme (MCS) rate, a Physical Layer Convergence Procedure (PLCP) time, a slot time, at least one media access control address (MAC) header and/or trailer data frame size, in particular MAC service data unit (MSDU) frame size or fragment size, and CWmin and/or CWmax values.

Considering the data transmit rate in view of one or more implementation settings allows further improvement in efficiency, by selection of the PHY rate according to the data transmit rate estimated for the implementation settings.

In a fourth possible implementation form of the apparatus according to the first aspect as such or according to any of the preceding implementation forms of the first aspect, the processor is adapted to estimate each one of the plurality of data transmit times according to at least one of a Padding value and a number of media access control address (MAC) service data unit (MSDU) frames in an aggregated MSDU frame.

The padding value and/or number of MSDU frames in the aggregated MSDU frame further improves selection of the PHY rate, by considering the larger variations in packet size arising from the padding and/or aggregation.

In a fifth possible implementation form of the apparatus according to the first aspect as such or according to any of the preceding implementation forms of the first aspect, the data transmit time represents the time to transmit data used by a high level application, using the WLAN frame, excluding overhead.

In a sixth possible implementation form of the apparatus according to the first aspect as such or according to any of the preceding implementation forms of the first aspect, the plurality of sequential WLAN frames are less than 120 bytes, and the transmitter transmits the WLAN frames at least at a PHY rate of 54 megabits per second (Mbps).

The system provides the greatest improvement in WLAN efficiency for short WLAN frames transmitted at high speeds, for example, that carry real-time internet applications, such as streaming videos, streaming audio, and online gaming.

In a seventh possible implementation form of the apparatus according to the first aspect as such or according to any of the preceding implementation forms of the first aspect, the analysis comprises identifying a lowest of the plurality of data transmit times.

According to an embodiment of the claimed invention, in an eighth implementation form of the apparatus according to the first aspect as such or according to any of the preceding implementation forms of the first aspect, when at least some WLAN frames are fragmented, each of the data transmit times are calculated using the equation below:

$$\mathrm{Tx}_{\mathrm{time}} = \left[ \left( \mathrm{PHY} + \mathrm{P} + \frac{(\mathrm{F}+\mathrm{MAC})\cdot 8}{\mathrm{PHY}_{\mathrm{Rate}}} \right) \cdot (1+\mathrm{PER}) \right] + \left[ \frac{\mathrm{CW}_{\min}\cdot\mathrm{S}}{2} \cdot \frac{(2\cdot\mathrm{PER})^{\mathrm{r}}-1}{2\cdot\mathrm{PER}-1} \right]$$

wherein: PHY denotes PLCP time; $\mathrm{PHY}_{\mathrm{rate}}$ denotes the PHY rate; P denotes protocol overheads; S denotes Slot time; MAC denotes MAC headers and/or trailers; F denotes Data frame size; $\mathrm{CW}_{\min}$ denotes initial contention window size; and r denotes the maximum number of frame or fragment re-transmissions.

According to an embodiment of the claimed invention, in a ninth implementation form of the apparatus according to the first aspect as such or according to any of the preceding implementation forms of the first aspect, when at least some WLAN frames are MAC aggregated, each of the data transmit times are calculated using the equation below:

$$\mathrm{Tx}_{\mathrm{time}} = \left[ \left( \mathrm{PHY} + \mathrm{P} + \frac{(\mathrm{A}\cdot(\mathrm{M}+\mathrm{F}+\mathrm{PD})+\mathrm{MH})\cdot 8}{\mathrm{PHY}_{\mathrm{Rate}}} \right) \cdot (1+\mathrm{PER}) \right] + \left[ \frac{\mathrm{CW}_{\min}\cdot\mathrm{S}}{2} \cdot \frac{(2\cdot\mathrm{PER})^{\mathrm{r}}-1}{2\cdot\mathrm{PER}-1} \right]$$

wherein: PHY denotes PLCP time; $\mathrm{PHY}_{\mathrm{rate}}$ denotes the PHY rate; P denotes protocol overheads; S denotes Slot time; MH denotes the MAC headers and/or trailers; M denotes the MAC A-MSDU aggregation header; F denotes Data frame size; PD denotes the Padding to 32 bits of MSDU; A denotes the number of MSDU in A-MSDU; $\mathrm{CW}_{\min}$ denotes initial contention window size; and r denotes the maximum number of frame or fragment re-transmissions.

According to a second aspect, a method for adapting a wireless transmission rate, comprises; performing the following for a transmission of each of a plurality of sequential wireless local area network (WLAN) frames: estimating a packet Error Rate (PER) and/or Aggregation Error Rate (AER) for each of a plurality of physical layer (PHY) rate values (according to frame size); estimating a plurality of data transmit times each according to respective the PER and/or the AER and one of the PHY rate values; and selecting one of the PHY rate values for adaption of a wireless transmission rate of the transmitter in a following frame according to an analysis of the plurality of data transmit times.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of a method for adapting a wireless transmission rate based on an estimate of data transmit times according to estimated PER and/or AER for each PHY rate value according to frame sizes, in accordance with some embodiments of the present invention;

FIG. 2 is a block diagram of components of a system that selects a PHY rate value for adaptation of a wireless transmission rate of a transmitter, according to an analysis of data transmit times, in accordance with some embodiments of the present invention;

FIG. 3 is a table according to IEEE802.11 standard, illustrating the different available data rates for each Task Group (TG), useful for understanding some embodiments of the present invention;

FIG. 4 is a chart depicting small steps of sensitivity levels for different MCS options, according to the 802.11*ac* Task Group, useful for understanding some embodiments of the present invention;

FIG. 5 is a chart depicting WLAN efficiency versus PHY rate and frame length, useful for understanding some embodiments of the present invention;

FIG. 6 is a schematic representing overhead of a frame transmitted using the DCF protocol, useful for understanding some embodiments of the present invention;

FIG. 7 is a chart depicting increasing accumulated BEB idle time for a contention window (CW) size ($ECW_{min}= 5$ until $ECW_{max}=10$) as a function of increasing packet error rate, useful for understanding some embodiments of the present invention;

FIG. 8 is a chart depicting a drop in efficiency of transmission of a 100 byte frame in a WLAN implementing 40 Mhz 4x4 11ac, useful for understanding some embodiments of the present invention;

FIG. 9 is a chart depicting a drop in transmission time of (i.e., average time to successfully transmit a) 100 byte frame in a WLAN implementing 40 Mhz 4x4 11ac, useful for understanding some embodiments of the present invention;

FIG. 10 is a chart depicting benchmarked performance of the ONOE, Minstrel, SampleRate, and AMRR rate control algorithms, useful for understanding some embodiments of the present invention;

FIG. 11 is another chart depicting benchmarked performance of the ONOE, Minstrel, SampleRate, and AMRR rate control algorithms, useful for understanding some embodiments of the present invention;

FIG. 12 is a graph of experimental results, in accordance with some embodiments of the present invention; and

FIG. 13 is another graph of experimental results, in accordance with some embodiments of the present invention.

DETAILED DESCRIPTION

The present invention, in some embodiments thereof, relates to wireless networks and, more specifically, but not exclusively, to systems and methods for adapting a wireless transmission rate of a wireless network.

An aspect of some embodiments of the present invention relates to systems and/or methods (e.g., a processor that executes code instructions based on the acts of the method) that adapt a wireless transmission rate according to estimated data transmit times. The data transmit times are estimated according to an estimated Packet Error Rate (PER) and/or an estimated Aggregation Error Rate (AER) determined for each of multiple physical layer (PHY) rate values, according to size of the transmitted frame. The data transmit times are analyzed, and used to select the PHY rate value for adapting the wireless transmission rate of the next wireless transmission (e.g., operating in a WLAN network). Optionally, the lowest data transmit time is determined. Optionally, the modulation and coding scheme (MCS) associated with the lowest data transmit time is selected for adaptation of the transmitter. The MCS is associated with a certain PHY rate value.

Optionally, the data transmit times are estimated according to an implementation of the wireless transmission system, for example, based on the wireless transmission standard and/or protocols. Optionally, the data transmit times are estimates according to PHY Protocol overhead value and/or Media Access Control (MAC) Protocol overhead value. Alternatively or additionally, the data transmit times are estimated according to one or more of: transmission scenario (e.g., fragmentation of frames, MAC aggregation of frames, and PHY aggregation of frames), PHY rate and/or MCS rate, Physical Layer Convergence Procedure (PLCP) time, slot time, MAC header and/or trailer, and data frame or fragment size (e.g., MAC service data unit (MSDU)), initial and/or final contention window size, padding value, and the number of MSDU frames in an aggregated MSDU frame. Estimation of the data transmit times using the additional factors may further improve the accuracy of the estimated data transmit time value, by considering the implementation of the wireless transmission standard and/or protocol.

The systems and/or method described herein optimize the data transmit time (i.e., throughput) of the wireless network, for example, in comparison to other rate control methods that optimize data rates and/or optimize the effective PHY rate. The data transmit time (i.e., throughput) provides a better indication of the WLAN performance, since throughput relates to the time it takes to transmit useful information, rather than the PHY rate (which includes overhead and other data that is not necessarily used by the high level application). The data transmit time (i.e., throughput) provides a more accurate representation of the delays that users experience, since users directly sense how fast information is sent. For example, users watching a video or listening to music quickly perceive if the throughput is inadequate, by noticing pauses in the sound and/or video, or perceiving changes in quality of the sound and/or video. Users cannot directly tell whether the data rate of the WLAN frames is sufficient.

The systems and/or methods (e.g., implemented using a processor(s) executing code instructions according to acts of the methods) described herein improve performance of WLANs. The greatest improvement tends to occur for wireless transmission by real-time applications, for example, audio and/or video (e.g., playing music and/or videos streamed from a remote server), gaming, and Internet of Things (IoT) devices. Such real-time applications use small frame sizes, for which the overhead represents a significant portion of the packet. The systems and/or methods described herein that optimize the data transmit time of the frame improve performance of such systems that transmit packets (e.g., including one or various sizes, for example, small packets and/or longer packets), optionally at high speeds, for example, in comparison to other rate adaptation methods that optimize the PHY rate directly.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Table 1 lists abbreviations used herein, for convenience of the reader.

Table (1)

| Abbreviations | Meaning |
|---|---|
| AARF | Adaptive Auto Rate Fallback |
| ACK | Acknowledgment |
| AER | Aggregation Error Rate |
| AIFS | Arbitration Inter-frame Space |
| AMRR | Adaptive Multi Rate Retry |
| AP | Access Point |
| ARF | Auto Rate Fallback |
| BA | Block Acknowledgment |
| BEB | Binary Backoff Algorithm |

(continued)

| Abbreviations | Meaning |
| --- | --- |
| BER | Bit Error Rate |
| BW | Bandwidth |
| CDF | Complementary Cumulative Distribution Function |
| CRC | Cyclic Redundancy Code |
| CTS | Clear To Send |
| DCF | Distributed Coordination Function |
| DIFS | Distributed (Coordination Function) Inter-frame Space |
| EWMA | Exponentially Weighted Moving Average |
| HT | High Throughput Header Type |
| IoT | Internet of Thinks |
| IP | Internet Protocol |
| LTF | Long Training Field |
| LUT | Look Up Table |
| MAC | Medium Access Control |
| MCS | Modulation And Coding Scheme |
| MHz | Mega Hertz |
| MMPDU | MAC Management Protocol Data Unit |
| MPDU | MAC Protocol Data Unit |
| MSDU | MAC Service Data Unit |
| NACK | Negative ACK |
| PER | Packet Error Ratio / Packet Error Rate |
| PHY | Physical (Layer) |
| PLCP | Physical Layer Convergence Procedure |
| PPDU | PLCP Protocol Data Unit |
| QoS | Quality Of Service |
| RBAR | Receiver Based Auto Rate |
| RCA | Rate Control Algorithm |
| RRAA | Robust Rate Adaptation Algorithm |
| RRM | Radio Resource Management |
| RTS | Request To Send |
| SA | Source Address |
| SFD | Start Frame Delimiter |
| SIFS | Short Inter-frame Space |
| SNR | Signal-To-Noise Ratio |
| ss | Station Service |
| STA | Station |
| STF | Short Training Field |
| TG | Task Group |

(continued)

| Abbreviations | Meaning |
|---|---|
| TX | Transmit or Transmitter |
| VHT | Very High Throughput |
| WLAN | Wireless Local Area Network |

As used herein, the term *data transmit time* (or *data transmit rate,* also referred to herein as *throughput*) represents the flow of useful information (e.g., data carried in the packet payload, such as data for high level applications being used by the user, excluding overhead data) over time. The data transmit time represents the time to transmit the data used by the high level application (e.g., video, audio, game, other real-time applications) using frames, excluding the overhead. It is noted that *data transmit time* and *throughput* are different than the term *data rate* defined by the 802.11 standard, and different than the PHY rate, which denote the speed that the data bits in individual WLAN data frames (e.g., defined by the 802.11 standard) are transmitted. It is noted that data transmit rate (i.e. throughput) is less than the data rate, due to relative long idle times between WLAN data frames and retransmission (e.g., due to noise). The data transmit time may be calculated, for example, using one or more of Equations (3)-(5) described herein.

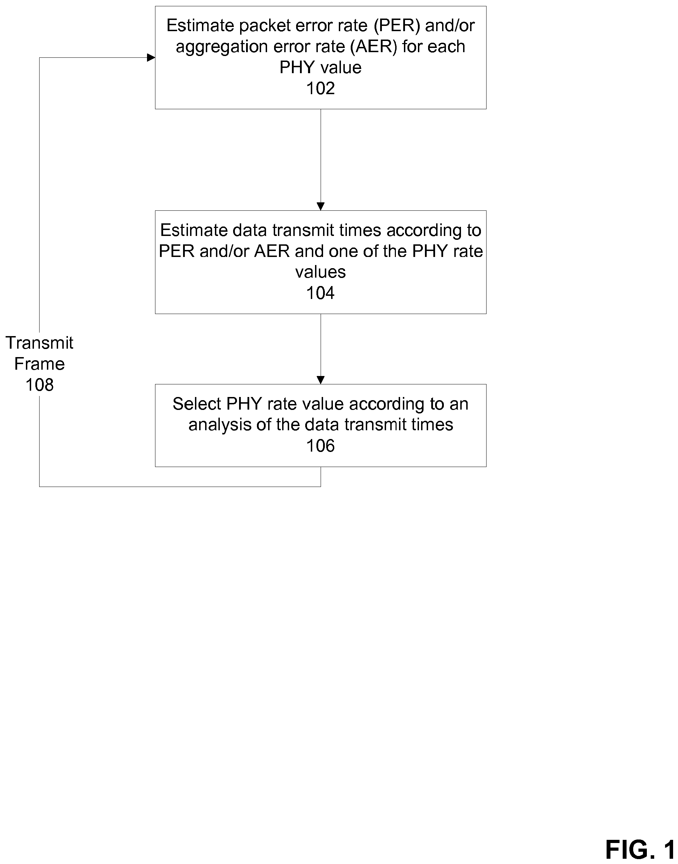

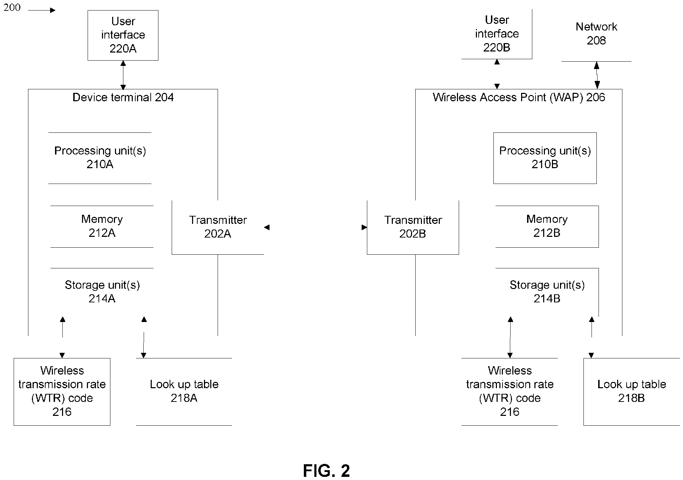

Reference is now made to FIG. 1, which is a flowchart of a method for adapting a wireless transmission rate based on an estimate of data transmit times according to estimated PER and/or AER for each PHY rate value according to frame sizes, in accordance with some embodiments of the present invention. Reference is also made to FIG. 2, which is a block diagram of components of a system 200 that selects a PHY rate value for adaptation of a wireless transmission rate of a transmitter (e.g., 202A and/or 202B), according to an analysis of data transmit times, in accordance with some embodiments of the present invention. The data transmit times are estimated according to estimated PER and/or AER for each PHY rate value according to frame sizes. The data transmit times may be calculated according to exemplary equations (3) - (5).

As discussed herein, in contrast to existing RCA methods that optimize the WLAN data rate by optimizing the effective PHY rate defined by Equation (2) (i.e., finding the PHY rate that reduce the data transmit time in a frame), wireless transmission rate (WTR) code 216 optimizes (e.g., maximizes) the throughput (e.g., by minimizing the data transmit time). The WTR code 216 improves WLAN performance over existing RCA methods, for example, for short packets i.e., frames (which have relatively long overheads compared to the packet length), optionally when transmitting longer packets at high PHY rates.

System 200 includes one or more device terminals 204 (for clarity and simplicity of explanation, one device terminal is shown in the FIG and described, but it is understood that multiple device terminals may be included) wirelessly communicating with a wireless access point (WAP) 206, for example, a router (e.g., Wi-Fi router), a base station, a radio access network, or other network communication device. WAP 206 may connect device terminal 204 to a network 208, for example, the internet, a local area network, a private network, or other networks.

Device terminal 204 may use WAP 206 to access network 208 using real-time applications that transmit short packets (at least over the wireless channel between device terminal 204 and WAP 206), for example, to watch videos hosted on a remote server, to listen to music hosted on a remote server, and to play a game hosted on a remote server.

Device terminal 204 may be mobile devices, which may communicate with WAP 206 while moving. Exemplary mobile devices include: smartphone, laptop, tablet computer, wearable computing device, glasses computing device, and watch computing device. Device terminal 204 may be implemented as a device that is designed to be stationary, for example, a desktop computer, and a kiosk computer. It is noted that device terminal 204 may be implemented as a device providing communication services between other device terminals and WAP 206, for example, a server, a network server, a router, a bridge, another WAP, or other network devices.

Device terminal 204 includes and/or are in communication with one or more transmitters 202A, for example one or more antennas. WAP 206 includes and/or are in communication with one or more transmitters 202B, for example one or more antennas. Transmitters 202A and/or 202B may include integrated receiver functions (e.g., a transceiver), and/or the receiver function may be implemented as a separate antenna.

Each device terminal 204 and WAP 206 includes a respective processing unit 210A-B and respective memory 212A-B for storing instruction code executable by the respective processing unit 210A-B.

Processing units 210A-B may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processing units 210A-B may include one or more processors (homogenous or heterogeneous), which may be arranged for parallel processing, as clusters and/or as one or more multi core processing units.

Memory 212A-B store code instructions executed by respective processing units 210A-B, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Device terminal 204 and/or WAP 206 may includes respective storage units 214A-B that act as a data repository for storing data, for example, a memory, a hard-drive, an optical disc, a storage unit, an interface to a remote storage server, and interface to a cloud server, and/or other storage units.

One or both storage units 214A-B may store wires transmission rate (WTR) code 216 that adapts the wireless transmission rate, as described herein. Alternatively or additionally, WTR code 216 is stored on a network management server and/or other remote server and/or other local computer.

Optionally, device terminal 204 and/or WAP 206 include and/or are in communication with a respectively user interface 220A and 220B, for example, one or more of, display, touch screen, keyboard, mouse, voice activated software, microphone, and touch pad. User interface 220A and/or 220B allows respective users to enter data and/or view data, for example, view system performance due to implementation of WTR code 216, and/or select configuration settings for WTR code 216.

It is noted that the WTR code may be implemented, for example, as software installed on an existing device terminal and/or WAP computer, as a hardware card plugged into existing WAP and/or other base station equipment, as a stand-along unit in communication with WAP and/or base station equipment (e.g., using cables and/or a wireless connection), and/or implemented within a wireless network management server in communication with one or more WAPs 206 and/or device terminals 204, for example, a server implementing self organizing network (SON) code.

It is noted that for clarity of explanation, one device terminal 204 is depicted. It is understood that multiple device terminals 204 may be communicating with WAP 206. Moreover, it is understood that one WAP 206 is shown for clarity of explanation, however system 200 may include a large number of WAPs, for example, for each cell of a cellular system.

To help the reader understand the systems and/or methods described herein, a discussion of rate adaption in wireless networks is now provided.

The data rate of a signal (e.g., packet, frame) is based on the time it takes to transmit the useful information (e.g., data stored in the payload used by the higher level application) and the overhead data bits (e.g., data stored in the header of the packet). In practice, the throughput is lower than the data rate (e.g., much lower) due to delays between transmissions, which may require retransmission of the packet.

The data rate affects the delay performance of the WLAN. The higher the data rate, the lower the delay when sending data from one device to another. Higher data rates may increase the capability of the wireless network to support a larger number of users. However, as discussed in additional detail below, setting of the data rate is based on a performance tradeoff, so higher data rate setting are not necessarily desired. Data rate alone is not a sufficient measure for the performance of the WLAN. Other factors that affect performance include, for example, effect of overhead bits, waiting times to access the wireless medium, and the format of the data being transmitted.

WLAN standards (e.g., IEEE 802.11) specify multiple data rates that may be used by the wireless transmitter, which may depend on the modulation and coding schemes used by the PHY layer. High rate enables shorter transmission time (e.g., of a frame), however high data rates are more sensitive to channel conditions (e.g., noise) than lower data rates, reducing the probability of a successful transmission for higher data rates. In contrast, low data rates require a relatively longer transmission time. However, the transmitted packets are more resilient to errors. A WLAN frame that fails to be ACKed (e.g., failure to decode at the receiver end) is re-transmitted until ACKed. Therefore, a successful transmission of the frame at a high rate over a poor quality wireless link (e.g., having a high bit error rate) effectively takes a longer time than the data rate assigned to the wireless link. As the error rate increases, the probability of a successful transmission decreases, requiring an increasing number of attempts to reach a successful transmission of the packet, which increases the average number of times that a packet is retransmitted over the wireless link to obtain a successful transmission. The average successful transmission time of a frame (in micro seconds ($\mu$sec)) is denoted by Equation (1):

$$\left( \text{Overheads}_{\text{usec}} + \frac{\left( \text{Overheads}_{\text{bytes}} + \text{Frame}_{\text{bytes}} \right) \cdot 8}{\text{PHY\_Rate}_{\text{Mbps}}(\text{mcs})} \right) \cdot \left( 1 - \text{PER}(\text{mcs}) \right) \qquad \text{Equation (1)}$$

*Overheads$_{usec}$* denotes the transmission time of the overhead of the frame.

*Overheads$_{bytes}$* denotes the size of the overhead of the frame in bytes.

*Frame$_{bytes}$* denotes the size of the frame in bytes.

*PHY_Rate$_{Mbps}$* denotes the data rate of the wireless channel.

*PER* denotes the packet error rate.

In practice, calculating the WLAN (e.g., 802.11) overhead is complex, since the overhead is defined according to the 802.11 task group, working mode, band, and other factors.

WLAN systems may allow the data rate to be manually defined and/or automatically adjusted. For example, when working in manual mode the network operator may set the PHY rate. High PHY rate values may be selected, for example, for high-performance WLANs. The manually set High PHY rate forces the wireless network to operate at the high defined data rate, to avoid transmissions at lower data rates, which may negatively impact overall performance. The tradeoff of increased performance using higher data rates arrives at the cost of a significant reduction in, for example, the cell range or the distance between the Access Point (AP) and its stations (STA), and/or the network performance in high noise and interference environments. Automatic rate control may be implemented to avoid the need to change the WLAN configuration whenever the environment changes or according to STA location.

The rate adaptation algorithms used by WLAN systems are designed to minimize transmit time or to optimize the transmit time, based on the following tradeoff decisions:

* Increase performance of the WLAN by increasing the data rate and the probability of losing packets, due to higher bit error rates.

* Decrease performance of the WLAN by reducing the data rate. System efficiency is reduced, since the wireless link resources are not fully utilized. However, the bit errors rate is reduced, decreasing the probability of packet loss.

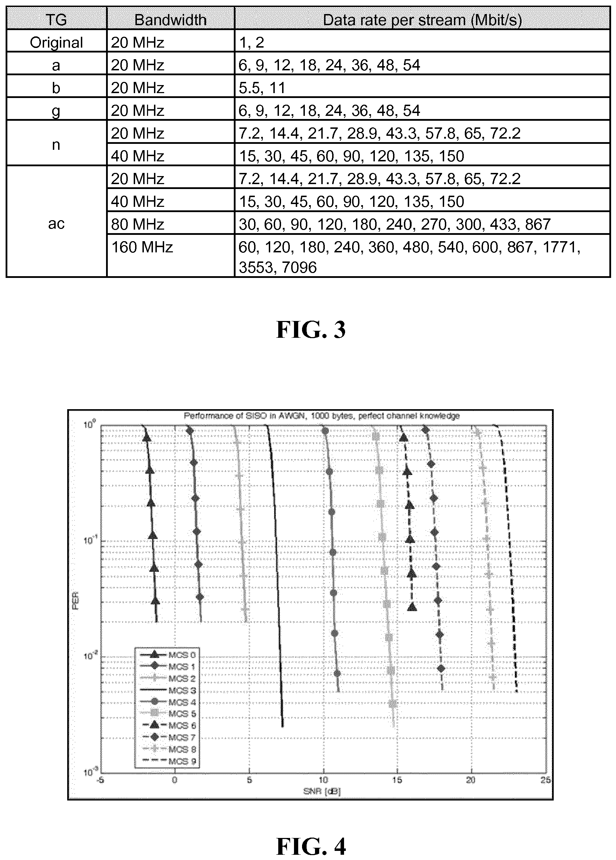

Reference is now made to FIG. 3, which is a table according to IEEE802.11 standard, illustrating the different available data rates for each Task Group (TG), useful for understanding some embodiments of the present invention.

Reference is also made to FIG. 4, which is a chart depicting small steps of sensitivity levels for different MCS options, according to the *ac* Task Group, useful for understanding some embodiments of the present invention.

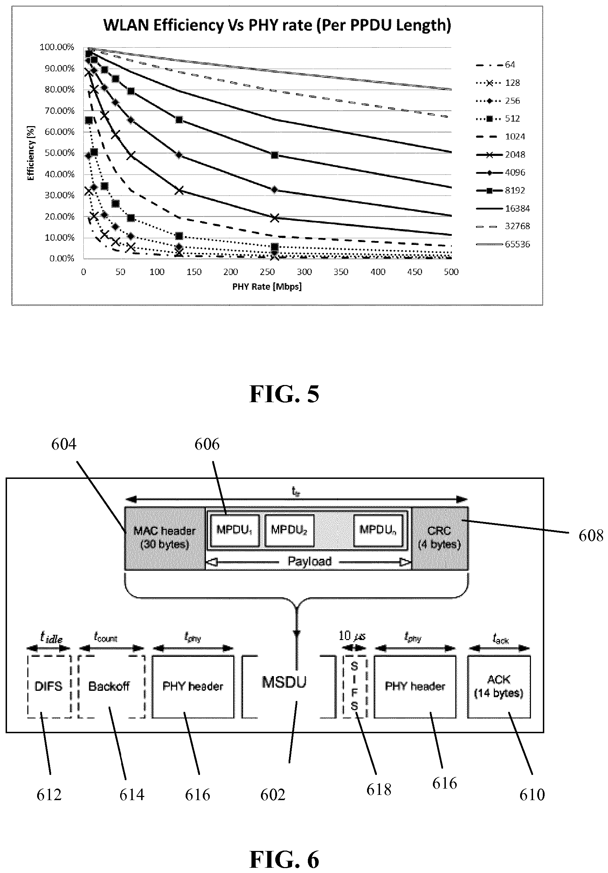

Reference is now made to FIG. 5, which is a chart depicting WLAN efficiency versus PHY rate and frame length, useful for understanding some embodiments of the present invention. The chart illustrates that even with significantly higher PHY data rates, the resulting increase in system throughput is a relatively minor improvement. Higher PHY data rates do not necessarily translate into higher throughput, since the fixed (in time) WLAN overhead (PHY & MAC) has a relatively higher impact with higher PHY rates (shorted data Tx time). FIG. 5 illustrates that WLAN efficiency drops dramatically when using short MPDUs/PPDUs.

Reference is now made to FIG. 6, which is a schematic representing overhead of a successful frame transmitted using the DCF protocol, useful for understanding some embodiments of the present invention. Packet transmission overhead is one of the main factors in MAC inefficiency, in particular, when using the DCF protocol. Each MSDU 602 includes a MAC header field 604, one or more MPDUs fields 606 and a CRC field 608. MAC header 605 and CRC 606 include up to 34 bytes. ACK frame 610 is 14 bytes long (it is noted that the block ACK is longer). The MSDU 602 payload (i.e., IP datagram) varies between 1 and 2,346 bytes.

DIFS 612 (Distributed Inter Frame Space, also termed Arbitration Inter Frame Space) denotes the minimal idle time before the Binary Exponential Backoff (BEB) algorithm starts.

Backoff 614 denotes the Slotted Aloha (SA) BEB algorithm.

PHY Header 616 includes all Physical Layer Convergence Procedure (PLCP) headers:

* 11a: 20 $\mu$sec (STF+LTF+Signal)
* 11b: 192 / 96 $\mu$sec (Sync+SFD+Signal+service+Length+CRC)
* 11g: 20 $\mu$sec (STF+LTF+Signal)
* 11n: 20 $\mu$sec (STF+LTF+Signal) + 20 $\mu$sec (HT) + 4*2*SS $\mu$sec
* 11ac: 20 $\mu$sec (STF+LTF+Signal) + 20 $\mu$sec (VHT) + 3*4*SS $\mu$sec

MAC Header (+ trailer) 604 includes 24 bytes to 34 bytes depending on the Task Group implementation, the QoS, and other factors.

SIFS (Short Inter-frame Space) 618 denotes a short gap between the data and ACK 610. The values depend on the channel. For 2.4 Gigahertz (GHz) band, the delay is 10 $\mu$sec. For 5GHz band, the delay is 16 $\mu$sec.

ACK 610 denotes the transmit acknowledge time (or timeout).

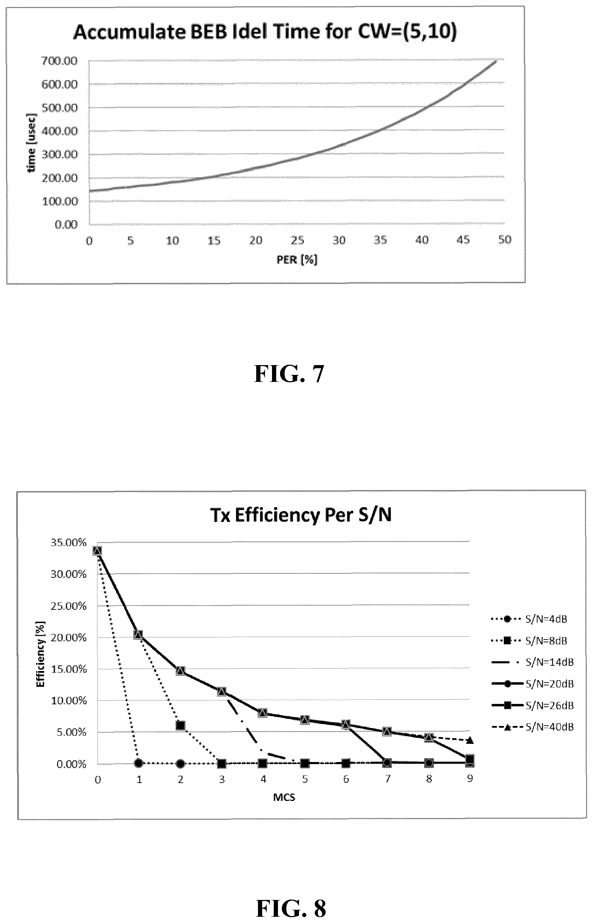

Reference is now made to FIG. 7, which is a chart depicting increasing accumulated BEB idle time (for a exponential Contention Window (CW) start value of 2^5=32 up to 2^10=1024) as a function of increasing packet error rate, useful for understanding some embodiments of the present invention. As discussed above, the packet error rate increases with increasing data rates (i.e., PHY rates). Therefore, higher data rate settings result in increasing the transmission time to transmit a packet successfully.

Reference is now made to FIG. 8, which is a chart depicting a drop in efficiency of transmission of a 100 byte frame in a WLAN implementing 40 Mhz 4x4 11ac, useful for understanding some embodiments of the present invention. The drop in efficiency is depicted for different MCS implementations at various signal to noise (S/N) levels.

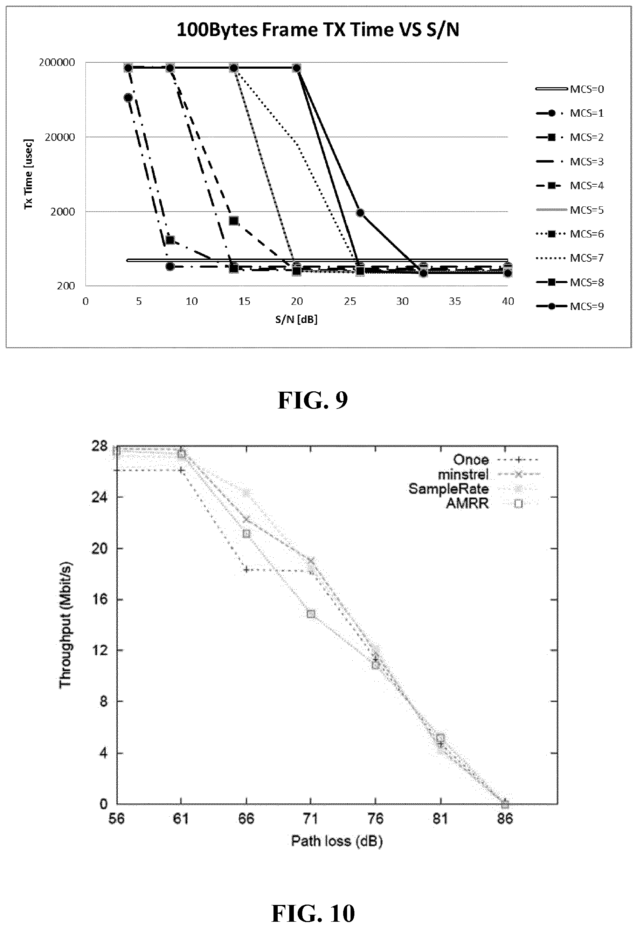

Reference is now made to FIG. 9, which is a chart depicting a drop in transmission time of (i.e., average time to successfully transmit a) 100 byte frame in a WLAN implementing 40 Mhz 4x4 11ac, useful for understanding some embodiments of the present invention. The drop in transmission time is depicted for different MCS implementations at various signal to noise (S/N) levels.

Some exemplary existing rate controls algorithms used in WLAN systems are not discussed, to illustrate the technical challenges that inventors discovered arise from the RCA implementations. The systems and/or methods described herein addressed the below discussed technical problems.

* The Auto Rate Fallback (ARF) method is the first published rate adaptation algorithm, published in 1997. The ARF algorithm defines a sender node that records the number of ACKS and NACKs transmissions to determine whether the current data rate is at the optimal rate. The ARF algorithm operates by increasing the data rate and resets the timer when either the sender node receives 10 success-fully ACK packets or the timer expires. The ARF method drops the data rate when the sender node has two consecutive failed transmissions or unsuccessful transmissions after the data rate is increased. Technical problems arise when ARF is implemented in a WLAN. First, the ARF method is unable to adapt the data rate fast enough when channel conditions change quickly (i.e., the method requires 10 ACKs frame to increases the data rate, but only 1 or 2 NACKs to reduce the data rate). Second, when channel conditions change very slowly and ARF selects an optimal data rate, the method will keep trying to use a higher data rate every 10 successful transmissions.

* The Adaptive Auto Rate Fallback (AARF) algorithm is based on ARF and is designed to provide both short-term and long-term adaptation. The AARF algorithm uses a continuously changing threshold to reflect the channel conditions. The threshold is determined by using a Binary Exponential Backoff (BEB) when the threshold initial value is 10 and the upper bound is 50. When the number of successful transmission equals the number of the threshold, the data rate is switched to a higher rate. When there are 2 consecutive NACKs the threshold is reset to an initial value and the data rate is switched back to the previous lower data rate. The threshold is set to two times (2x) the number of consecutive successful transmissions when the probing packet is not able to transmit successfully. AARF algorithm improves the performance when the wireless channel conditions change very fast or very slow.

* The Adaptive Multi Rate Retry (AMRR) is the first algorithm that introduced a retry chain concept for rate adaptation. A retry chain includes four pairs of data rate and retry counter (i.e., *r0/c0, r1/c1, r2/c2, r3/c3*). The retry counter denotes the maximum number of retransmissions that allow a data rate to be used for transmitting a packet. The data rate *r3* is set to the lowest data rate. Data rate *r1* and *r2* are set to the immediately lower available rates after rate *r0*. Determining data rate *r0* is based on a concept similar to the concept described with reference to the AARF algorithm, using the BEB to adapt the success threshold.

* The ONOE algorithm is a credit based RCA. The value of the credit is determined by successful, erroneous and retransmissions occurrences during a fixed invocation period. If less than 10% of the packets need to be retransmitted at a particular rate, the PHY rate increases its credit point until the threshold value of 10 is reached. The current transmission rate is increased to the next available higher rate and the process is repeated with a credit score of zero. Similar logic is applied to deduce the credit score and move to a lower bit-rate for failed packet transmission/retransmission attempts. However, once a bit-rate has been marked as a failure in the previous attempt, the ONOE method does not attempt to select that bit-rate until a timeout period has elapsed since the last attempt. The ONOE method is designed to be conservative in data rate selection and is less sensitive to individual packet failure or rapid channel changes (e.g., occurring during mobility of the device terminal).

* The Minstrel algorithm (Madwifi team, Qualcomm Atheros team) is designed to maximize the throughput of IEEE 802.11 WLAN. The Minstrel algorithm probes the wireless channel in order to get an overview of the health of the wireless channel (using the probing packets as Look around packets) and spends a limit amount of time for probing bit-rates other than the current rate. The probing bit-rate selection in Minstrel is done intelligently (e.g., Minstrel does not sample rates that cannot possibly provide throughput improvement). Per rate statistics of the channel are evaluated periodically using EWMA (exponential weighted moving average) in order to update historical statistics. Data rate selection is based on optimizing (maximizing) the data rate that provides the maximal throughput, or by estimating the effective PHY rate based on the number of retransmissions (history based) per PHY rate according to the relationship

$$\text{DataRate} = PHY_{\text{rate}} \cdot \left(1 - \text{PER}\right)$$

Equation (2)

Reference is now made to FIG. 10, which is a chart depicting benchmarked performance of the ONOE, Minstrel, SampleRate, and AMRR rate control algorithms, useful for understanding some embodiments of the present invention. The chart depicts decreasing throughput (in Megabits/second) as a function of increasing path loss (in decibels) for each of the RCAs.

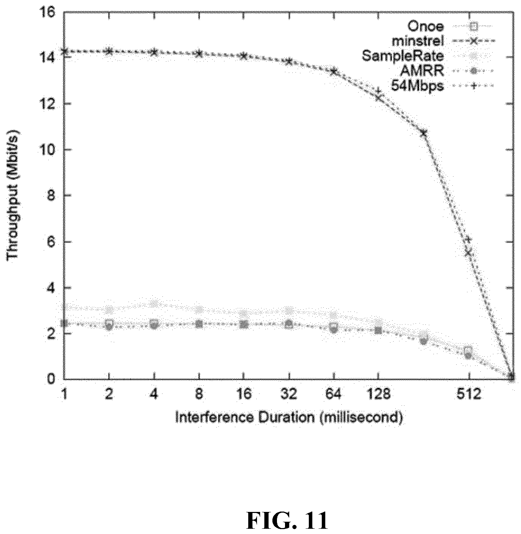

Reference is now made to FIG. 11, which is another chart depicting benchmarked performance of the ONOE, Minstrel, SampleRate, and AMRR rate control algorithms, useful for understanding some embodiments of the present invention. The chart depicts decreasing throughput (in Megabits/second) as a function of increasing interference duration (in milliseconds) for each of the RCAs.

Inventors realized that the previously developed rate control methods (e.g., ONOE, Minstrel, Sample Rate, AMRR, and others) appear to optimize the effective PHY rate (e.g., based on FIGs. 10-11) for PHY rates that are relatively low (e.g., ≤ 54 Megabits per second (Mbps), based on the capabilities of WLAN system that existed when the previously developed rate control methods were designed (e.g., 1997-2006, which may be considered the early years of the 802.11 standard). At that time, most internet applications were based on browsing applications, associated with relatively long data packets (e.g., > 1000 bytes). Inventors realized that in such a WLAN environment, optimizing the effective PHY rate appears to provide good results, because the MAC and PHY overheads were relative low (i.e., short). As PHY data rates increased (e.g., with improvements in technology), the WLAN efficiency appeared to drop when the MAC and/or PHY overhead remained fixed and/or relatively long. The 802.11n TG standard introduced new efficiency optimization features (i.e., PHY aggregation, BA, and others) that reduce the MAC and/or PHY overheads for large PPDUs, in order to improve WLAN efficiency due to the fixed and/or long overheads.

Inventors realized that WLAN standards appear to perform minimal or no optimization to small PPDUs. Inventors realized that the WLANs are used for real-time network applications, such as audio, gaming, videos, and IoT devices, which use very small fragment sizes, in contrast with traditional network applications such as email, file transfer, and web browser which use large packets. Inventors realized that the very small packet sizes decrease WLAN transmission efficiency.

Referring now back to FIG. 1, the acts of the method may be implemented by WTR code 216, based on code instructions stored in memory 212A and/or 212B executed by respective processing unit 210A-B. For clarity, the acts of the method are described in relation to components of system 200 of FIG. 2. The acts of the method are performed for a transmission of each of sequential WLAN frames by a transmitter (e.g., 202A and/or 202B).

Optionally, at least some of the WLAN frames carry data associated with a high level application running on device terminal 204, for example, a video player playing a video streamed from a remote server (accessed using WAP 206), a music player playing audio streamed from a remote server, and a game hosted by a remote server. Optionally, the WLAN frames are small on average, for example, the average size and/or at least 50% of the frame sizes are less than or equal to 64 bytes, or less than or equal to 120 bytes, or less than or equal to 512 bytes, or less than or equal to 1000 byes. Optionally, the WLAN frames are transmitted using high PHY rates, for example, at least about 54 Mbps, or at least about 300 Mbps, or at least about 1000 Mbps.

At 102, WTR code 216 (or other code) estimates a packet Error Rate (PER) and/or Aggregation Error Rate (AER) for each of the PHY rate values according to frame size.

The AER may be calculated when PHY aggregation (e.g., A-MPDU) is implemented by system 200 (in which case both AER and PER may be calculated). The AER may have a different value than the PER when the PER is calculated using block ACK (BA) or ACK frames, and/or when the AER is calculated using NACKs (i.e., fail to receive ACK).

It is noted that the PER and/or AER may be estimated for each PHY rate value using one or several methods. For example, the PER and/or AER may be estimated per available MCS (e.g., as defined by the implemented wireless standard), such as when controlling the MCS controls the PHY rate value. Alternatively or additionally, the PER and/or AER may be estimated directly per PHY rate value. For each PHY rate, the PER may be a function of the frame size. The estimation may be improved by estimating the PER and/or AER (e.g., for each MSC) for each frame size, or constant fragment sizes may be used.

Optionally, code 216 quantizes the PER per quantized Protocol data unit (PPDU) size, in particular including collisions and hidden node. Estimating the PER per quantized PPDU may improve measurement of the PER (and/or BER), since the PER (and/or BER) increases when the transmission time increases, for example, in WLAN systems implementing 802.11. The quantization may allow building of a look-up table, which may be quickly created and quickly accessed to select the PHY rate value.

At 104, WTR 216 estimates data transmit times each according to respective PER and/or AER, and one of the PHY rate values. The data transmit time is calculated for one or more sets of PER and/or AER, and PHY rate value.

The successful data transmit time of each frame for each PHY rate value (and/or MCS value) is estimated, for example, the PHY rate value may vary for different MCS values. The PHY rate value may be controlled by selection of the MCS value. Alternatively or additionally, the PHY rate value may be directly controlled. The successful data transmit time represents the mathematical expectation time of a successful transmission time per PHY rate value (and/or per MCS).

Optionally, each one of the data transmit times is estimated according to the PHY Protocol overhead value and/or the Media Access Control (MAC) Protocol overhead value. The overhead values are considered to calculate the actual transmitted data, which further improves efficiency of the WLAN, by the WTR code 216 that increases the data transmit time while reducing or in view of the overhead values.

Alternatively or additionally, each one of the data transmit times is estimated according to one or more of:

* A transmission scenario, which includes one or more of: fragmentation or no fragmentation of frames (e.g., MSDU), MAC aggregation (e.g., A-MSDU), and PHY aggregation (e.g., A-MPDU).
* A PHY rate and/or Modulation and Coding Scheme (MCS) rate, which may be defined by the WLAN implementation, such as the implemented wireless standard.
* A Physical Layer Convergence Procedure (PLCP) time.
* A slot time.
* MAC header and/or trailer data frame size, in particular MAC service data unit (MSDU) frame size or fragment size. The frame may be a whole frame, or a fragmented frame. MSDUs or MMPDU may be portioned into smaller MAC level frames (e.g, MPDUs) by a fragmentation process. Individually addressed MSDUs or MMPDUs may be fragmented and reassembled. The fragmentation and defragmentation mechanisms allow for fragment retransmission. It is noted that the WLAN system may use similar (or same) overheads for transmission of frames (e.g., MSDU) and fragments (e.g., fragmented MSDU), in which case MSDUs and fragmented MSDUs may be processed by WTR code 216 in a similar manner.
* Initial contention window size (CWmin) and/or final contention window size (CWmax) values.

Optionally, WTR code 216 estimates each one of the data transmit times according to a Padding value and/or a number of MAC address service data unit (MSDU) frames in an aggregated MSDU frame. The padding value and/or number of MSDU frames in the aggregated MSDU frame further improves selection of the PHY rate, by considering the larger variations in packet size arising from the padding and/or aggregation.

Optionally, a look up table (LUT) is populated using the calculated estimated data transmit times per frame size, PHY rate, PER, and overheads (e.g., per TG, mode, and other parameters), and other values (e.g., transmission scenario, PHY rate and/or MCS rate, PLCP time, slot time, MAC header and/or trailer, CWmin, and/or CWmax) such as A-MSDU size, and/or A-MPDU size. The data transmit rate may be calculated using one or more of Equations (3)-(5) described herein. The data structure may be two dimensional (e.g., LUT), or higher dimensions (e.g., when additional factors are considered for selection of the PHY rate).

It is noted that other data structure implementations may be used (in addition to, or instead of the LUT), for example, a function (e.g., regression function), and/or a statistical classifier. As used herein, the term *LUT* is exemplary, as other data implementations that output a PHY value for inputted PER and/or AER and/or data transmit times may be used.

Optionally, each transmitter 202A-B creates its own respective LUT 218A-B according to PER and/or AER and/or data transmit times calculated for the respective transmitter 202A-B. The created LUT 218A-B may be stored in respective storage unit 214A-B, or other storage devices.

According to an embodiment of the claimed invention, the data transmit times are estimated for a fragmentation implementation (e.g., for a fragmented frame (MSDU) or non-fragmented frame (MSDU)) using the following relationship:

$$\mathrm{Tx}_{\mathrm{time}} = \left[ \left( \mathrm{PHY} + \mathrm{P} + \frac{(\mathrm{F} + \mathrm{MAC}) \cdot 8}{\mathrm{PHY}_{\mathrm{Rate}}} \right) \cdot (1 + \mathrm{PER}) \right] + \left[ \frac{\mathrm{CW}_{\mathrm{min}} \cdot \mathrm{S}}{2} \cdot \frac{(2 \cdot \mathrm{PER})^{\mathrm{r}} - 1}{2 \cdot \mathrm{PER} - 1} \right]$$

$$\mathrm{Equation}(3)$$

Where:

PHY denotes PLCP time optionally measured in microseconds (μsec), for example, per TG, number of spatial streams, BW, and/or other parameters.
$\mathrm{PHY}_{\mathrm{rate}}$ denotes the PHY rate or MCS (e.g., inMbps)
P denotes protocol overheads e.g., DIFS/AIFS time + SIFS + ACK/NACK time (e.g., in μsec), for example, as described herein with reference to FIG. 6.
S denotes Slot time (e.g., in μsec).
MAC denotes MAC headers and/or trailers (optionally between 24 and 34 Bytes).
F denotes Data frame (e.g., MSDU size or fragment size, in bytes).
$\mathrm{CW}_{\mathrm{min}}$ denotes initial contention window size.
r denotes the maximum number of frame (or fragment) re-transmissions.

According to another embodiment of the claimed invention, the the data transmit times are estimated for a MAC aggregation implementation (e.g., A-MSDU) using the following relationship:

$$Tx_{time} = \left[\left(PHY + P + \frac{(A \cdot (M + F + PD) + MH) \cdot 8}{PHY_{Rate}}\right) \cdot (1 + PER)\right] + \left[\frac{CW_{min} \cdot S}{2} \cdot \frac{(2 \cdot PER)^r - 1}{2 \cdot PER - 1}\right]$$

$$Equation(4)$$

Where:

PHY denotes PLCP time optionally measured in microseconds ($\mu$sec), for example, for example, per TG, number of spatial streams, BW, and/or other parameters.

$PHY_{rate}$ denotes the PHY rate or MCS (e.g., inMbps)

P denotes protocol overheads e.g., DIFS/AIFS time + SIFS + ACK/NACK time (e.g., in $\mu$sec), for example, as described herein with reference to FIG. 6.

S denotes Slot time (e.g., in $\mu$sec).

MH denotes the MAC headers and/or trailers (optionally between 24 and 34 Bytes)

M denotes the MAC A-MSDU aggregation header (optionally 14 Bytes).

F denotes Data frame size (e.g., MSDU size or fragment size, in bytes).

PD denotes the Padding to 32 bits of MSDU.

A denotes the number of MSDU in A-MSDU.

$CW_{min}$ denotes initial contention window size.

$r$ denotes the maximum number of frame (or fragment) re-transmissions.

At 106, WTR code 216 selects one of the PHY rate values for adaption of the wireless transmission rate of transmitter 202A and/or 202B in a following frame according to an analysis of the data transmit times. The analysis may include identification of the lowest data transmit time. The PHY rate associated with the lowest data transmit time is selected.

Optionally, the MCS which provides the PHY rate with the lowest data transmit times is selected.

Optionally, the A-MSDU size is selected to further improve the PHY rate value. Alternatively or additionally, the MCS is selected to further improve the PHY rate value. The PHY rate value, and/or the MCS, and/or the A-MSDU size may be selected according to the lowest data transmit time.

Optionally, the PHY rate (for the next frame transmission) is selected using an exemplary data structure depicted below (e.g., LUT 218A and/or 218B). The data structure includes columns representing MCS options, and rows representing frame size (e.g., other mapping and/or classification and/or calculating data structure implementations may be used). The cells store the estimated data transmit time for each combination of MCS and frame size (and/or aggregation potential size). The analysis may be performed to identify the entry (e.g., cell) with the smallest transmit time per byte. The corresponding frame size and/or MCS for transmitting the next frame may be selected according to the identified entry.

Table (2)

| | 1x1 0 | ... | 1x1 9 | 2x2 0 | ... | 2x2 9 | 3x3 0 | ... | 3x3 7 | ... |
|---|---|---|---|---|---|---|---|---|---|---|
| 64 | | | | | | | | | | |
| : | | | | | | | | | | |
| 512 | | | | | | | | | | |
| : | | | | | | | | | | |
| 4096 | | | | | | | | | | |
| : | | | | | | | | | | |
| 16K | | | | | | | | | | |
| : | | | | | | | | | | |
| 100K | | | | | | | | | | |

At 108, the frame is transmitted according to the determined PHY rate value. The frame may be transmitted using the MCS and/or frame size (e.g., by fragmenting the frame or aggregating frames) and/or other parameters associated with the determined PHY rate value.

Blocks 102-106 are iterated, optionally for each frame.

It is noted that each entry of the LUT may be calculated for each frame, during each iteration, and/or after several iterations (e.g., according to a predefined number of transmitted frames, and/or according to a randomly selected number of frames), and/or triggered by an event (e.g., change in the state of the wireless channel, and/or movement of position of the device terminal). Alternatively, the LUT is populated with the values of the current and/or previous frame transmissions, according to the transmission scenario of the respectively transmitted frame.

Inventors performed experiments to estimate the improvement in efficiency of a WLAN implementing the systems and/or methods described herein (e.g., the WTR code). A set-up based on system 200 of FIG. 2 is implemented to execute the acts described with reference to the method of FIG. 1. The experimental results show that efficiency improved up to 60% for a frame size of 64 bytes, up to 35% for a frame size of 1000 bytes, up to 20% for a frame size of 4 kilobytes (KB), and 20% improvement of the data rate when average internet data is transmitted (e.g., over 50% of the internet packets are smaller than 120 Bytes).

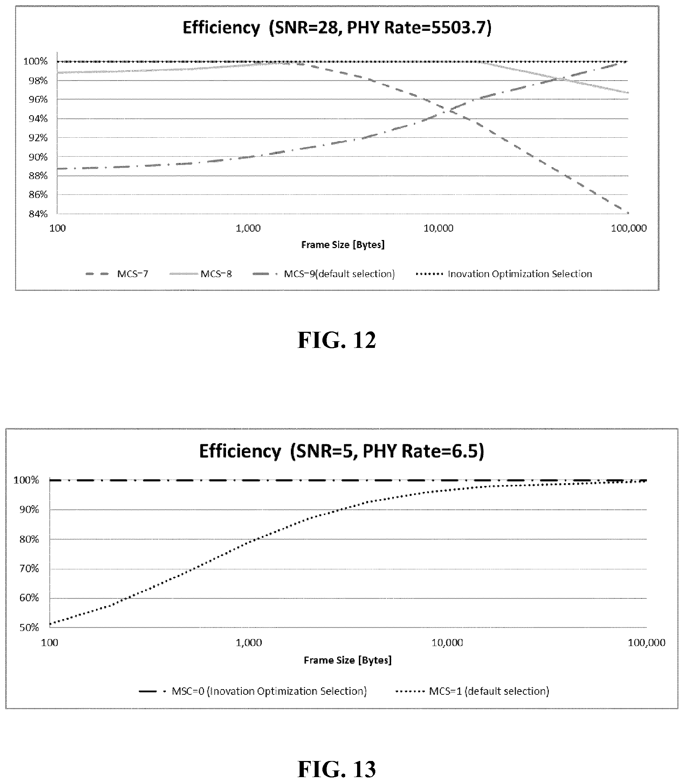

Reference is now made to FIG. 12, which is a graph of experimental results, in accordance with some embodiments of the present invention. The graph illustrates efficiency as a function of frame size for SNR = 28 and PHY rate = 5503.7, for MCS selected using standard methods and for MCS selected using the systems and/or methods described herein (e.g., WTR code). The graph shows an improvement in efficiency using the systems and/or methods described herein in comparison to standard methods.

Reference is now made to FIG. 13, which is another graph of experimental results, in accordance with some embodiments of the present invention. The graph illustrates efficiency as a function of frame size for SNR = 5 and PHY rate = 6.5, for MCS selected using standard methods and for MCS selected using the systems and/or methods described herein (e.g., WTR code). The graph shows an improvement in efficiency using the systems and/or methods described herein in comparison to standard methods.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant transmitters and WLAN frames will be developed and the scope of the terms transmitter and frame is intended to include all such new technologies a priori.

As used herein the term "about" refers to ± 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

In addition, citation or identification of any reference in this application shall not be construed as an admission that such reference is available as prior art to the present invention. To the extent that section headings are used, they should not be construed as necessarily limiting.

**Claims**

1. A system for adapting a wireless transmission rate, comprising;

a transmitter;

a processor adapted to perform the following for a transmission of each of a plurality of sequential wireless local area network, WLAN, frames by said transmitter:

estimate (102) a packet Error Rate, PER, for each of a plurality of physical layer, PHY, rate values;
estimate (104) a plurality of data transmit times each according to respective said PER and one of said PHY rate values; and
select (106) one of said PHY rate values for adaption of a wireless transmission rate of said transmitter in a following frame according to an analysis of said plurality of data transmit times,
**characterised in that**, when at least some WLAN frames are fragmented, each of said data transmit times are calculated using the equation below:

$$\mathrm{Tx}_{\mathrm{time}} = \left[\left(\mathrm{PHY} + \mathrm{P} + \frac{(\mathrm{F} + \mathrm{MAC}) \cdot 8}{\mathrm{PHY}_{\mathrm{Rate}}}\right) \cdot (1 + \mathrm{PER})\right] + \left[\frac{\mathrm{CW}_{\min} \cdot \mathrm{S}}{2} \cdot \frac{(2 \cdot \mathrm{PER})^{\mathrm{r}} - 1}{2 \cdot \mathrm{PER} - 1}\right]$$

Wherein:

PHY denotes PLCP time;
$\mathrm{PHY}_{\mathrm{rate}}$ denotes the PHY rate;
P denotes protocol overheads;
S denotes Slot time;
MAC denotes MAC headers and/or trailers;
F denotes Data frame size;
$\mathrm{CW}_{\min}$ denotes initial contention window size; and
$r$ denotes the maximum number of frame or fragment re-transmissions.

2. A system for adapting a wireless transmission rate, comprising;

a transmitter;

a processor adapted to perform the following for a transmission of each of a plurality of sequential wireless local area network, WLAN, frames by said transmitter:

estimate (102) a packet Error Rate, PER, for each of a plurality of physical layer, PHY, rate values;
estimate (104) a plurality of data transmit times each according to respective said PER and one of said PHY rate values; and
select (106) one of said PHY rate values for adaption of a wireless transmission rate of said transmitter in a following frame according to an analysis of said plurality of data transmit times,
**characterised in that**, when at least some WLAN frames are MAC aggregated, each of said data transmit times are calculated using the equation below:

$$Tx_{time} = \left[ \left( PHY + P + \frac{(A \cdot (M + F + PD) + MH) \cdot 8}{PHY_{Rate}} \right) \cdot (1 + PER) \right] + \left[ \frac{CW_{min} \cdot S}{2} \cdot \frac{(2 \cdot PER)^r - 1}{2 \cdot PER - 1} \right]$$

Wherein:

PHY denotes PLCP time;
$PHY_{rate}$ denotes the PHY rate;
P denotes protocol overheads;
S denotes Slot time;
MH denotes the MAC headers and/or trailers;
M denotes the MAC A-MSDU aggregation header;
F denotes Data frame size;
PD denotes the Padding to 32 bits of MSDU;
A denotes the number of MSDU in A-MSDU;
$CW_{min}$ denotes initial contention window size; and
*r* denotes the maximum number of frame or fragment re-transmissions.

3. The system of claim 1 or 2, wherein said processor is adapted to estimate each one of said plurality of data transmit times according to at least one of a PHY Protocol overhead value and Media access control, MAC, Protocol overhead value.

4. The system of any of the previous claims, wherein said processor is adapted to estimate each one of said plurality of data transmit times according to a member of a group cosseting of:

a transmission scenario,
a PHY rate and/or Modulation and Coding Scheme, MCS, rate,
a Physical Layer Convergence Procedure, PLCP, time,
a slot time,
at least one media access control address, MAC, header and/or trailer
data frame size, in particular MAC service data unit, MSDU, frame size or fragment size, and
CWmin and/or CWmax values.

5. The system of any of the previous claims, wherein said processor is adapted to estimate each one of said plurality of data transmit times according to at least one of a Padding value and a number of media access control address, MAC, service data unit, MSDU, frames in an aggregated MSDU frame.

6. The system of any of the previous claims, wherein said data transmit time represents the time to transmit data used by a high level application, using said WLAN frame, excluding overhead.

7. The system of any of the previous claims, wherein said plurality of sequential WLAN frames are less than 120 bytes, and said transmitter transmits said WLAN frames at least at a PHY rate of 54 megabits per second, Mbps.

8. The system of any of the previous claims, wherein said analysis comprises identifying a lowest of said plurality of data transmit times.

9. A method for adapting a wireless transmission rate, comprising;
performing the following for a transmission of each of a plurality of sequential wireless local area network, WLAN, frames:

Estimating (102) a packet Error Rate, PER, for each of a plurality of physical layer, PHY, rate values;
estimating (104) a plurality of data transmit times each according to respective said PER and one of said PHY rate values;
selecting (106) one of said PHY rate values for adaption of a wireless transmission rate of said transmitter in a following frame according to an analysis of said plurality of data transmit times;
**characterised in that**,
when at least some WLAN frames are fragmented, each of said data transmit times are calculated using the equation below:

$$Tx_{time} = \left[\left(PHY + P + \frac{(F+MAC)\cdot 8}{PHY_{Rate}}\right)\cdot(1+PER)\right] + \left[\frac{CW_{min}\cdot S}{2}\cdot\frac{(2\cdot PER)^r - 1}{2\cdot PER - 1}\right]$$

Wherein:

PHY denotes PLCP time;
$PHY_{rate}$ denotes the PHY rate;
P denotes protocol overheads;
S denotes Slot time;
MAC denotes MAC headers and/or trailers;
F denotes Data frame size;
$CW_{min}$ denotes initial contention window size; and
r denotes the maximum number of frame or fragment re-transmissions.

10. A method for adapting a wireless transmission rate, comprising;
performing the following for a transmission of each of a plurality of sequential wireless local area network, WLAN, frames:

Estimating (102) a packet Error Rate, PER, for each of a plurality of physical layer, PHY, rate values;
estimating (104) a plurality of data transmit times each according to respective said PER and one of said PHY rate values;
selecting (106) one of said PHY rate values for adaption of a wireless transmission rate of said transmitter in a following frame according to an analysis of said plurality of data transmit times;
**characterised in that**, when at least some WLAN frames are MAC aggregated, each of said data transmit times are calculated using the equation below:

$$Tx_{time} = \left[\left(PHY + P + \frac{(A\cdot(M+F+PD)+MH)\cdot 8}{PHY_{Rate}}\right)\cdot(1+PER)\right] + \left[\frac{CW_{min}\cdot S}{2}\cdot\frac{(2\cdot PER)^r - 1}{2\cdot PER - 1}\right]$$

Wherein:

PHY denotes PLCP time;
$PHY_{rate}$ denotes the PHY rate;
P denotes protocol overheads;
S denotes Slot time;
MH denotes the MAC headers and/or trailers;
M denotes the MAC A-MSDU aggregation header;
F denotes Data frame size;
PD denotes the Padding to 32 bits of MSDU;
A denotes the number of MSDU in A-MSDU;
$CW_{min}$ denotes initial contention window size; and
r denotes the maximum number of frame or fragment re-transmissions.

**Patentansprüche**

1. System zum Anpassen einer Drahtlosübertragungsrate, umfassend:

einen Sender;
einen Prozessor, der geeignet ist zum Ausführen der folgenden Schritte für eine Übertragung einer Vielzahl von aufeinanderfolgenden Frames eines drahtlosen lokalen Netzwerks (Wireless Local Area Network, WLAN) durch den Sender:

Schätzen (102) einer Datenpaketfehl errate (Packet Error Rate, PER) für jeden aus einer Vielzahl von Ratenwerten einer Datenübertragungsschicht (Physical Layer, PHY);

Schätzen (104) einer Vielzahl von Datenübertragungszeiten jeweils gemäß einer entsprechenden PER und einem der PHY-Ratenwerte; und

Auswählen (106) eines der PHY-Ratenwerte zum Anpassen einer Drahtlosübertragungsrate des Senders in einem nachfolgenden Frame gemäß einer Analyse der Vielzahl von Datenübertragungszeiten,

**dadurch gekennzeichnet, dass**, wenn mindestens einige WLAN-Frames fragmentiert sind, jede der Datenübertragungszeiten mithilfe der folgenden Gleichung berechnet wird:

$$\text{Tx}_{\text{time}} = \left[\left(\text{PHY} + \text{P} + \frac{(\text{F}+\text{MAC})\cdot 8}{\text{PHY}_{\text{Rate}}}\right) \cdot (1 + \text{PER})\right] + \left[\frac{\text{CW}_{\text{min}}\cdot\text{S}}{2} \cdot \frac{(2\cdot\text{PER})^{\text{r}}-1}{2\cdot\text{PER}-1}\right]$$

wobei:

PHY eine PLCP-Zeit bezeichnet;
$\text{PHY}_{\text{rate}}$ die PHY-Rate bezeichnet;
P die Protokollzusatzdaten bezeichnet;
S eine Schlitzzeit bezeichnet;
MAC die MAC-Kopfzeilen und/oder -Anhänge bezeichnet;
F die Datenframegröße bezeichnet;
$\text{CW}_{\text{min}}$ die anfängliche Konfliktfenstergröße bezeichnet; und
r die maximale Anzahl von Frame- oder Fragmentneuübertragungen bezeichnet.

2. System zum Anpassen einer Drahtlosübertragungsrate, umfassend:

einen Sender;
einen Prozessor, der geeignet ist zum Ausführen der folgenden Schritte für eine Übertragung einer Vielzahl von aufeinanderfolgenden Frames eines drahtlosen lokalen Netzwerks, WLAN, durch den Sender:

Schätzen (102) einer Datenpaketfehlerrate, PER, für jeden aus einer Vielzahl von Ratenwerten einer Datenübertragungsschicht, PHY;

Schätzen (104) einer Vielzahl von Datenübertragungszeiten jeweils gemäß einer entsprechenden PER und einem der PHY-Ratenwerte; und

Auswählen (106) eines der PHY-Ratenwerte zum Anpassen einer Drahtlosübertragungsrate des Senders in einem nachfolgenden Frame gemäß einer Analyse der Vielzahl von Datenübertragungszeiten,

**dadurch gekennzeichnet, dass**, wenn mindestens einige WLAN-Frames MACaggregiert sind, jede der Datenübertragungszeiten mithilfe der folgenden Gleichung berechnet wird:

$$\text{Tx}_{\text{time}} = \left[\left(\text{PHY} + \text{P} + \frac{(\text{A}\cdot(\text{M}+\text{F}+\text{PD})+\text{MH})\cdot 8}{\text{PHY}_{\text{Rate}}}\right) \cdot (1 + \text{PER})\right] + \left[\frac{\text{CW}_{\text{min}}\cdot\text{S}}{2} \cdot \frac{(2\cdot\text{PER})^{\text{r}}-1}{2\cdot\text{PER}-1}\right]$$

wobei:

PHY eine PLCP-Zeit bezeichnet;
$\text{PHY}_{\text{rate}}$ die PHY-Rate bezeichnet;
P die Protokollzusatzdaten bezeichnet;
S eine Schlitzzeit bezeichnet;
MH die MAC-Kopfzeilen und/oder -Anhänge bezeichnet;
M die MAC-A-MSDU-Aggregationskopfzeile bezeichnet;
F eine Datenframegröße bezeichnet;
PD das Auffüllen der MSDU auf 32 Bit bezeichnet;
A die Anzahl von MSDU in einer A-MSDU bezeichnet;
$\text{CW}_{\text{min}}$ die anfängliche Konfliktfenstergröße bezeichnet; und
r die maximale Anzahl von Frame- oder Fragmentneuübertragungen bezeichnet.

3. System nach Anspruch 1 oder 2, wobei der Prozessor geeignet ist zum Schätzen von jeder aus der Vielzahl von Datenübertragungszeiten gemäß mindestens einem eines PHY-Protokollzusatzdatenwerts und eines Protokollzusatzdatenwerts einer Medienzugangssteuerung (Media Access Control, MAC).

4. System nach einem der vorhergehenden Ansprüche, wobei der Prozessor geeignet ist zum Schätzen von jeder aus der Vielzahl von Datenübertragungszeiten gemäß einem Element einer Gruppe die sich zusammensetzt aus:

> einem Übertragungsszenario,
> einer PHY-Rate und/oder einer Rate eines Modulations- und Codierungsschemas (Modulation and Coding Scheme rate, MCS-Rate),
> einer Zeit einer Datenübertragungsschichtkonvergenzprozedur (Physical Layer Convergence Procedure time, PLCP-Zeit),
> einer Schlitzzeit,
> mindestens einer Datenframegröße einer Kopfzeile oder eines Anhanges einer Medienzugangssteueradresse (Media Access Control address, MAC-Adresse), insbesondere einer Framegröße oder einer Fragmentgröße einer MAC-Dienstdateneinheit (MAC Service Data Unit, MSDU) und
> CWmin- und/oder CWmax-Werten.

5. System nach einem der vorhergehenden Ansprüche, wobei der Prozessor geeignet ist zum Schätzen von jeder aus der Vielzahl von Datenübertragungszeiten gemäß mindestens einem eines Auffüllwerts und einer Anzahl von MAC-Dienstdateneinheitframes (MSDU-Frames) in einem aggregierten MSDU-Frame.

6. System nach einem der vorhergehenden Ansprüche, wobei die Datenübertragungszeit die Zeit zum Übertragen der Daten darstellt, die von einer übergeordneten Anwendung mithilfe des WLAN-Frames ausschließlich der Zusatzdaten verwendet wird.

7. System nach einem der vorhergehenden Ansprüche, wobei die Vielzahl von aufeinanderfolgenden WLAN-Frames weniger als 120 Bytes aufweisen und der Sender die WLAN-Frames mindestens mit einer PHY-Rate von 54 Megabit pro Sekunde, Mbps, überträgt.

8. System nach einem der vorhergehenden Ansprüche, wobei die Analyse ein Identifizieren der Geringsten der Vielzahl von Datenübertragungszeiten umfasst.

9. Verfahren zum Anpassen einer Drahtlosübertragungsrate, umfassend:
Ausführen der folgenden Schritte für eine Übertragung einer Vielzahl von aufeinanderfolgenden Frames eines drahtlosen lokalen Netzwerks, WLAN:

> Schätzen (102) einer Datenpaketfehlerrate, PER, für jeden aus einer Vielzahl von Ratenwerten einer Datenübertragungsschicht, PHY;
> Schätzen (104) einer Vielzahl von Datenübertragungszeiten jeweils gemäß einer entsprechenden PER und einem der PHY-Ratenwerte;
> Auswählen (106) eines der PHY-Ratenwerte zum Anpassen einer Drahtlosübertragungsrate des Senders in einem nachfolgenden Frame gemäß einer Analyse der Vielzahl von Datenübertragungszeiten;
> **dadurch gekennzeichnet, dass**, wenn mindestens einige WLAN-Frames fragmentiert sind, jede der Datenübertragungszeiten mithilfe der folgenden Gleichung berechnet wird:

$$\mathrm{Tx_{time}} = \left[\left(\mathrm{PHY} + \mathrm{P} + \frac{(\mathrm{F}+\mathrm{MAC})\cdot 8}{\mathrm{PHY_{Rate}}}\right) \cdot (1 + \mathrm{PER})\right] + \left[\frac{\mathrm{CW_{min}}\cdot\mathrm{S}}{2} \cdot \frac{(2\cdot\mathrm{PER})^{\mathrm{r}}-1}{2\cdot\mathrm{PER}-1}\right]$$

wobei:

> PHY eine PLCP-Zeit bezeichnet;
> PHY$_{rate}$ die PHY-Rate bezeichnet;
> P die Protokollzusatzdaten bezeichnet;
> S eine Schlitzzeit bezeichnet;
> MAC die MAC-Kopfzeilen und/oder -Anhänge bezeichnet;
> F die Datenframegröße bezeichnet;

CW$_{min}$ die anfängliche Konfliktfenstergröße bezeichnet; und
r die maximale Anzahl von Frame- oder Fragmentneuübertragungen bezeichnet.

**10.** Verfahren zum Anpassen einer Drahtlosübertragungsrate, umfassend:

Ausführen der folgenden Schritte für eine Übertragung von jeder aus einer Vielzahl von aufeinanderfolgenden Frames eines drahtlosen lokalen Netzwerks, WLAN:

Schätzen (102) einer Datenpaketfehlerrate, PER, für jeden aus einer Vielzahl von Ratenwerten einer Datenübertragungsschicht, PHY;
Schätzen (104) einer Vielzahl von Datenübertragungszeiten jeweils gemäß einer entsprechenden PER und einem der PHY-Ratenwerte;
Auswählen (106) eines der PHY-Ratenwerte zum Anpassen einer Drahtlosübertragungsrate des Senders in einem nachfolgenden Frame gemäß einer Analyse der Vielzahl von Datenübertragungszeiten;
**dadurch gekennzeichnet, dass**, wenn mindestens einige WLAN-Frames MACaggregiert sind, jede der Datenübertragungszeiten mithilfe der folgenden Gleichung berechnet wird:

$$\mathrm{Tx_{time}} = \left[\left(\mathrm{PHY} + \mathrm{P} + \frac{(A\cdot(M+F+PD)+MH)\cdot 8}{\mathrm{PHY_{Rate}}}\right)\cdot(1+\mathrm{PER})\right] + \left[\frac{CW_{min}\cdot S}{2}\cdot\frac{(2\cdot\mathrm{PER})^r-1}{2\cdot\mathrm{PER}-1}\right]$$

wobei:

PHY eine PLCP-Zeit bezeichnet;
PHY$_{rate}$ die PHY-Rate bezeichnet;
P die Protokollzusatzdaten bezeichnet;
S eine Schlitzzeit bezeichnet;
MH die MAC-Kopfzeilen und/oder -Anhänge bezeichnet;
M die MAC-A-MSDU-Aggregationskopfzeile bezeichnet;
F eine Datenframegröße bezeichnet;
PD das Auffüllen der MSDU auf 32 Bit bezeichnet;
A die Anzahl von MSDU in einer A-MSDU bezeichnet;
CW$_{min}$ die anfängliche Konfliktfenstergröße bezeichnet; und
r die maximale Anzahl von Frame- oder Fragmentneuübertragungen bezeichnet.

## Revendications

**1.** Système d'adaptation d'un débit de transmission sans fil, comprenant ;
un émetteur ;
un processeur adapté pour effectuer ce qui suit pour une transmission de chacune d'une pluralité de trames séquentielles de réseau local sans fil, WLAN, par ledit émetteur :

estimer (102) un taux d'erreur de paquet, PER, pour chacune d'une pluralité de valeurs de débit de couche physique, PHY ;
estimer (104) une pluralité de temps de transmission de données, chacun selon ledit PER respectif et une desdites valeurs de débit PHY ; et
sélectionner (106) une desdites valeurs de débit PHY pour l'adaptation d'un débit de transmission sans fil dudit émetteur dans une trame suivante selon une analyse de ladite pluralité de temps de transmission de données, **caractérisé en ce que**,
lorsqu'au moins certaines trames WLAN sont fragmentées, chacun desdits temps de transmission de données est calculé à l'aide de l'équation ci-dessous :

$$\mathrm{Tx_{time}} = \left[\left(\mathrm{PHY} + \mathrm{P} + \frac{(F+MAC)\cdot 8}{\mathrm{PHY_{Rate}}}\right)\cdot(1+\mathrm{PER})\right] + \left[\frac{CW_{min}\cdot S}{2}\cdot\frac{(2\cdot\mathrm{PER})^r-1}{2\cdot\mathrm{PER}-1}\right]$$

où :

PHY désigne le temps de PLCP ;
PHY$_{rate}$ désigne le débit PHY ;
P désigne des surdébits de protocole ;
S désigne un créneau temporel ;
MAC désigne des en-têtes et/ou des queues MAC ;
F désigne la taille de la trame de données ;
CW$_{min}$ désigne la taille de la fenêtre de contention initiale ; et
r désigne le nombre maximum de retransmissions de trames ou de fragments.

2. Système d'adaptation d'un débit de transmission sans fil, comprenant ;
un émetteur ;
un processeur adapté pour effectuer ce qui suit pour une transmission de chacune d'une pluralité de trames séquentielles de réseau local sans fil, WLAN, par ledit émetteur :

estimer (102) un taux d'erreur de paquet, PER, pour chacune d'une pluralité de valeurs de débit de couche physique, PHY ;
estimer (104) une pluralité de temps de transmission de données, chacun selon ladite valeur de taux PER et l'une desdites valeurs de débit PHY respectives ; et
sélectionner (106) une desdites valeurs de débit PHY pour l'adaptation d'un débit de transmission sans fil dudit émetteur dans une trame suivante selon une analyse de ladite pluralité de temps de transmission de données, **caractérisé en ce que**,
lorsqu'au moins certaines trames WLAN sont agrégées MAC, chacun desdits temps de transmission des données est calculé à l'aide de l'équation ci-dessous :

$$\text{Tx}_{time} = \left[\left(\text{PHY} + \text{P} + \frac{(A \cdot (M + F + PD) + MH) \cdot 8}{\text{PHY}_{Rate}}\right) \cdot (1 + PER)\right] + \left[\frac{CW_{min} \cdot S}{2} \cdot \frac{(2 \cdot PER)^r - 1}{2 \cdot PER - 1}\right]$$

où :

PHY désigne le temps de PLCP ;
PHY$_{rate}$ désigne le débit PHY ;
P désigne des surdébits de protocole ;
S désigne un créneau temporel ;
MH désigne les en-têtes et/ou les queues MAC ;
M désigne l'en-tête d'agrégation MAC A-MSDU ;
F désigne la taille de la trame de données ;
PD désigne le remplissage à 32 bits de la MSDU ;
A désigne le nombre de MSDU dans A-MSDU ;
CW$_{min}$ désigne la taille de la fenêtre de contention initiale ; et
r désigne le nombre maximum de retransmissions de trames ou de fragments.

3. Système selon la revendication 1 ou 2, ledit processeur étant adapté pour estimer chacun de ladite pluralité de temps de transmission de données selon au moins une valeur de surdébit du protocole PHY et une valeur de surdébit de protocole de contrôle d'accès au support, MAC.

4. Système selon l'une quelconque des revendications précédentes, ledit processeur étant adapté pour estimer chacun de ladite pluralité de temps de transmission de données selon un membre d'un groupe consistant en :

un scénario de transmission,
un débit PHY et/ou un taux de modulation et de schéma de codage, MCS,
un temps de procédure de convergence de la couche physique, PLCP,
un créneau temporel,
au moins une taille de trame de données d'en-tête et/ou de queue d'adresse de contrôle d'accès au support, MAC, en particulier une taille de trame ou une taille de fragment d'unité de données du service MAC, MSDU, et des valeurs CW$_{min}$ et/ou CW$_{max}$.

**5.** Système selon l'une quelconque des revendications précédentes, ledit processeur étant adapté pour estimer chacun de ladite pluralité de temps de transmission de données selon au moins l'une d'une valeur de remplissage et d'un certain nombre de trames d'unité de données de service, MSDU, d'adresse de contrôle d'accès au support, MAC, dans une trame MSDU agrégée.

**6.** Système selon l'une quelconque des revendications précédentes, ledit temps de transmission de données représentant le temps de transmission des données utilisées par une application de haut niveau, en utilisant ladite trame WLAN, à l'exclusion du surdébit.

**7.** Système selon l'une quelconque des revendications précédentes, ladite pluralité de trames WLAN séquentielles étant inférieure à 120 octets, et ledit émetteur transmettant lesdites trames WLAN au moins à un débit PHY de 54 mégabits par seconde, Mbps.

**8.** Système selon l'une quelconque des revendications précédentes, ladite analyse comprenant l'identification de la plus basse de ladite pluralité de temps de transmission de données.

**9.** Procédé d'adaptation d'un débit de transmission sans fil, comprenant ;
la réalisation de ce qui suit pour une transmission de chacune d'une pluralité de trames séquentielles de réseau local sans fil, WLAN :

l'estimation (102) d'un taux d'erreur de paquet, PER, pour chacune d'une pluralité de valeurs de débit de couche physique, PHY ;
l'estimation (104) d'une pluralité de temps de transmission de données, chacun selon ledit PER respectif et une desdites valeurs de débit PHY ;
la sélection (106) de l'une desdites valeurs de débit PHY pour l'adaptation d'un débit de transmission sans fil dudit émetteur dans une trame suivante selon une analyse de ladite pluralité de temps de transmission de données ;
**caractérisé en ce que**,
lorsqu'au moins certaines trames WLAN sont fragmentées, chacun desdits temps de transmission de données est calculé à l'aide de l'équation ci-dessous :

$$\mathrm{Tx}_{\mathrm{time}} = \left[ \left( \mathrm{PHY} + \mathrm{P} + \frac{(\mathrm{F}+\mathrm{MAC})\cdot 8}{\mathrm{PHY}_{\mathrm{Rate}}} \right) \cdot (1+\mathrm{PER}) \right] + \left[ \frac{\mathrm{CW}_{\min}\cdot \mathrm{S}}{2} \cdot \frac{(2\cdot\mathrm{PER})^{\mathrm{r}}-1}{2\cdot\mathrm{PER}-1} \right]$$

où :

PHY désigne le temps de PLCP ;
$\mathrm{PHY}_{\mathrm{rate}}$ désigne le débit PHY ;
P désigne des surdébits de protocole ;
S désigne un créneau temporel ;
MAC désigne des en-têtes et/ou des queues MAC ;
F désigne la taille de la trame de données ;
$\mathrm{CW}_{\min}$ désigne la taille de la fenêtre de contention initiale ; et
*r* désigne le nombre maximum de retransmissions de trames ou de fragments.

**10.** Procédé d'adaptation d'un débit de transmission sans fil, comprenant ;
l'exécution de ce qui suit pour une transmission de chacune d'une pluralité de trames séquentielles de réseau local sans fil, WLAN :

l'estimation (102) d'un taux d'erreur de paquet, PER, pour chacune d'une pluralité de valeurs de débit de couche physique, PHY ;
l'estimation (104) d'une pluralité de temps de transmission de données, chacun selon ledit PER respectif et une desdites valeurs de débit PHY ;
la sélection (106) de l'une desdites valeurs de débit PHY pour l'adaptation d'un débit de transmission sans fil dudit émetteur dans une trame suivante selon une analyse de ladite pluralité de temps de transmission de données ;

**caractérisé en ce que**,

lorsqu'au moins certaines trames WLAN sont agrégées MAC, chacun desdits temps de transmission des données est calculé à l'aide de l'équation ci-dessous :

$$\text{Tx}_{\text{time}} = \left[ \left( \text{PHY} + \text{P} + \frac{(A \cdot (M + F + PD) + MH) \cdot 8}{\text{PHY}_{\text{Rate}}} \right) \cdot (1 + \text{PER}) \right] + \left[ \frac{\text{CW}_{\min} \cdot S}{2} \cdot \frac{(2 \cdot \text{PER})^r - 1}{2 \cdot \text{PER} - 1} \right]$$

où :

PHY désigne le temps de PLCP ;
$\text{PHY}_{\text{rate}}$ désigne le débit PHY ;
P désigne des surdébits de protocole ;
S désigne un créneau temporel ;
MH désigne des en-têtes et/ou des queues MAC ;
M désigne l'en-tête d'agrégation MAC A-MSDU ;
F désigne la taille de la trame de données ;
PD désigne le remplissage à 32 bits de la MSDU ;
A désigne le nombre de MSDU dans A-MSDU ;
$\text{CW}_{\min}$ désigne la taille de la fenêtre de contention initiale ; et
$r$ désigne le nombre maximum de retransmissions de trames ou de fragments.

Estimate packet error rate (PER) and/or aggregation error rate (AER) for each PHY value
102

Estimate data transmit times according to PER and/or AER and one of the PHY rate values
104

Transmit Frame
108

Select PHY rate value according to an analysis of the data transmit times
106

**FIG. 1**

200 →

User interface 220A

Device terminal 204

Processing unit(s) 210A

Memory 212A

Transmitter 202A

Storage unit(s) 214A

Wireless transmission rate (WTR) code 216

Look up table 218A

User interface 220B

Network 208

Wireless Access Point (WAP) 206

Processing unit(s) 210B

Transmitter 202B

Memory 212B

Storage unit(s) 214B

Wireless transmission rate (WTR) code 216

Look up table 218B

**FIG. 2**

| TG | Bandwidth | Data rate per stream (Mbit/s) |
|---|---|---|
| Original | 20 MHz | 1, 2 |
| a | 20 MHz | 6, 9, 12, 18, 24, 36, 48, 54 |
| b | 20 MHz | 5.5, 11 |
| g | 20 MHz | 6, 9, 12, 18, 24, 36, 48, 54 |
| n | 20 MHz | 7.2, 14.4, 21.7, 28.9, 43.3, 57.8, 65, 72.2 |
| | 40 MHz | 15, 30, 45, 60, 90, 120, 135, 150 |
| ac | 20 MHz | 7.2, 14.4, 21.7, 28.9, 43.3, 57.8, 65, 72.2 |
| | 40 MHz | 15, 30, 45, 60, 90, 120, 135, 150 |
| | 80 MHz | 30, 60, 90, 120, 180, 240, 270, 300, 433, 867 |
| | 160 MHz | 60, 120, 180, 240, 360, 480, 540, 600, 867, 1771, 3553, 7096 |

## FIG. 3

## FIG. 4

**FIG. 5**

**FIG. 6**

**FIG. 7**

**FIG. 8**

**FIG. 9**

**FIG. 10**

**FIG. 11**

EP 3 252 977 B1

**Efficiency (SNR=28, PHY Rate=5503.7)**

Frame Size [Bytes]

— — MCS=7    ——— MCS=8    —— · MCS=9(default selection)    ······· Inovation Optimization Selection

**FIG. 12**

**Efficiency (SNR=5, PHY Rate=6.5)**

Frame Size [Bytes]

—— · MSC=0 (Inovation Optimization Selection)    ······· MCS=1 (default selection)

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAJI QIAO.** Goodput enhancement of IEEE 802.11a wireless LAN via link adaptation. *2001 IEEE INTERNATIONAL CONFERENCE ON COMMUNICATIONS,* 11 June 2001, ISBN 0-7803-7097-X

- **DAJI QIAO ; SHIN KANG G. ; SUNGHYUN CHOI.** Goodput analysis and link adaptation for IEEE 802.11a wireless LANs. *IEEE TRANSACTIONS ON MOBILE COMPUTING,* 2002, vol. 1 (4), ISSN 1536-1233